(19) Europäisches Patentamt

European Patent Office

Office européen des brevets

(11) EP 1 455 436 A1

(12) DEMANDE DE BREVET EUROPEEN

(43) Date de publication:
08.09.2004 Bulletin 2004/37

(51) Int Cl.$^7$: H02K 15/16, G01R 31/34

(21) Numéro de dépôt: 03004796.3

(22) Date de dépôt: 05.03.2003

(84) Etats contractants désignés:
AT BE BG CH CY CZ DE DK EE ES FI FR GB GR
HU IE IT LI LU MC NL PT RO SE SI SK TR
Etats d'extension désignés:
AL LT LV MK

(71) Demandeur: Ecole Polytechnique Fédérale de
Lausanne (EPFL)
1015 Lausanne (CH)

(72) Inventeurs:
• Tu, Xuan-Mai
1024 Ecublens (CH)
• Simond, Jean-Jacques
1110 Morges (CH)

(74) Mandataire: Reuteler, Raymond Werner
WILLIAM BLANC & CIE,
Conseils en Propriété Industrielle SA,
25, Avenue du Pailly
1220 Les Avanchets/Genève (CH)

(54) **Procédé et dispositif de traitement de signaux pour la détection de l'excentricité d'une machine synchrone**

(57) Sur une machine synchrone, par la mesure d'une tension induite ($u_i$) aux bornes de boucles de mesure (2) aptes à capter une image de l'induction dans l'entrefer à l'endroit des mesures, puis par un traitement de ces signaux, on peut déterminer les valeurs de l'excentricité statique ($\varepsilon s$) de l'excentricité dynamique ($\varepsilon d$), de même que l'effort radial non compensé (F) dû à ces excentricités de la machine.

Fig. 8

EP 1 455 436 A1

**Description**

La présente invention concerne un procédé de traitement de signaux de tensions induites fournis par des spires de mesures disposées sur une machine synchrone, ainsi que le dispositif associé, afin de détecter et mesurer l'excentricité de ladite machine synchrone.

Dans une machine synchrone à pôles saillants avec un grand nombre de pôles, l'entrefer, c'est-à-dire l'espace entre le rotor et le stator, est extrêmement petit par rapport au diamètre extérieur du rotor de la machine. De ce fait il est pratiquement impossible d'assurer un centrage parfait du rotor dans le stator.

Il s'ensuit une excentricité, de type statique ou dynamique, comme on le verra plus loin, ayant pour conséquence néfaste la création d'une attraction magnétique unilatérale, ou non compensée, importante, pouvant atteindre plusieurs centaines de tonnes et apte à provoquer dans certains cas un collage du rotor dans le stator, amenant à un endommagement important de la machine.

Afin de contrôler cette excentricité, la plupart des dispositifs de surveillance existants utilisent des capteurs capacitifs pour mesurer l'entrefer de la machine en plusieurs endroits du pourtour interne du stator. Ces dispositifs présentent deux inconvénients majeurs :

- pour garantir une bonne fiabilité de la mesure de l'entrefer, les capteurs capacitifs sont relativement complexes et onéreux,
- la seule mesure de l'entrefer mécanique ne fournit aucune indication sur la force d'attraction unilatérale réelle, vu que celle-ci dépend aussi des courants induits dans les différents enroulements de la machine.

Dans la publication « Luftspaltüberwachung von Vollpolsynchron-generatoren unter Berücksichtigung paralleler Wicklungszweige » publiée dans « Electrical Engineering Vol.78 ; No 1 ; Dec.1994 ; pp 29-31 ; par M. W. Janssen » l'auteur propose l'utilisation de spires de mesure placées au niveau du stator de la machine pour capter le flux dans l'entrefer afin d'étudier le facteur d'amortissement dû à l'enroulement amortisseur et aux voies en parallèle de l'enroulement d'induit. Cette étude se limite à la détermination de ce facteur d'amortissement et ne propose aucune solution pour la détermination de la valeur réelle de l'excentricité, ni sur l'effet d'attraction non compensé qui en résulte.

Un premier but de l'invention est donc de proposer un procédé amélioré de traitement de signaux mesurés sur la machine afin d'en déterminer le type d'excentricité, la valeur d'excentricité ainsi que la force non compensée produite.

Un autre but de l'invention est de proposer un dispositif amélioré de surveillance en continu et de traitement de signaux mesurés sur la machine afin d'en déterminer le type d'excentricité, la valeur d'excentricité ainsi que la force non compensée produite.

Ces buts sont obtenus par un procédé tel que décrit dans la revendication 1, ainsi que par un dispositif comme décrit dans la revendication 2, des formes d'exécution particulières étant décrites dans les revendications dépendantes.

Une forme d'exécution particulière du procédé selon l'invention et du dispositif selon l'invention associé sont décrites ci-dessous, cette description étant à considérer en regard du dessin annexé comportant les figures où :

la figure 1 est une vue en coupe d'une machine synchrone à pôles saillants classique,
la figure 2 représente la répartition de l'induction générée par l'enroulement d'excitation dans l'entrefer d'une machine correctement centrée,
la figure 3 représente la position relative du rotor par rapport au stator dans le cas d'une excentricité statique,
la figure 4 représente la position relative du rotor par rapport au stator dans le cas d'une excentricité dynamique,
la figure 5 représente la répartition de l'induction dans l'entrefer dans le cas d'une machine excentrée,
la figure 6 représente un exemple de positionnement d'une spire de mesure,
la figure 7 représente les signaux mesurés aux bornes de trois spires de mesure,
la figure 8 représente le schéma de déroulement des étapes du procédé selon l'invention,
la figure 9 représente les signaux de sortie après filtrage,
la figure 10 représente les signaux de sortie après extraction des enveloppes,
la figure 11 représente les valeurs moyennes $e_{im}$ des enveloppes en fonction de la position angulaire $\alpha_{si}$ des spires,
la figure 12 représente le spectre temporel à la sortie des moyens d'analyse harmonique,
la figure 13 représente le spectre spatial à la sortie des moyens d'analyse harmonique, et
la figure 14 représente le schéma bloc d'un dispositif de mesure en continu d'une machine synchrone selon l'invention.

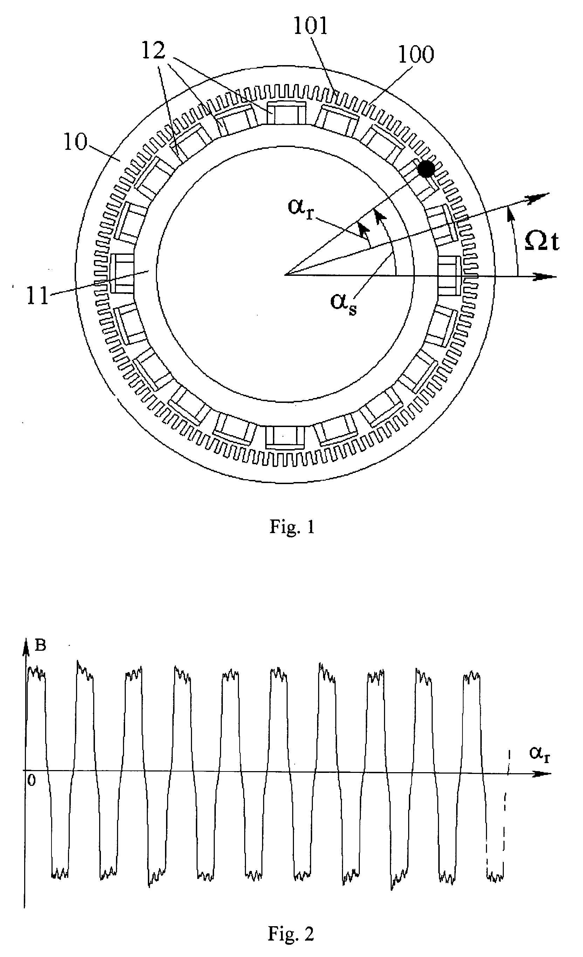

La figure 1 est une vue en coupe d'une machine synchrone à pôles saillants classique constituée d'un stator 10, comportant une pluralité de dents 100 séparées par des encoches 101 et un rotor 11 muni d'un enroulement d'excitation 12. Un enroulement statorique, non représenté sur cette figure, est logé dans les encoches 101.

Lorsque la machine est parfaitement centrée, l'induction dans l'entrefer de la machine à vide, telle que représentée à la figure 2, peut être exprimée par une série de Fourier :

$$B(\alpha_r) = \sum_{\upsilon} {}^{\upsilon}B_{\max} . \sin(\upsilon\alpha_r + \phi_{\upsilon}) \qquad [1]$$

où :

${}^{\upsilon}B_{\max}$ =    amplitude de l'harmonique de rang ν

$\phi_{\upsilon}$ =    phase de l'harmonique de rang ν

$\alpha_r$ =    angle géométrique dans un référentiel lié au rotor

On constate qu'en plus du fondamental de rang ν = p, p étant le nombre de paires de pôles de la machine, la courbe d'induction possède des harmoniques de rang élevé dues à l'encochage du stator et à la saillance des pôles du rotor.

Lorsque le rotor tourne à vitesse angulaire Ω constante, l'induction dans l'entrefer en fonction de l'angle $\alpha_s$ dans un référentiel lié au stator s'écrit :

$$B(\alpha_s) = \sum_{\upsilon} {}^{\upsilon}B_{\max} . \sin(\upsilon(\alpha_s - \Omega t) + \phi_{\upsilon}) \qquad [2]$$

En pratique l'entrefer d'une machine synchrone à pôles saillants est extrêmement petit par rapport au diamètre extérieur du rotor. Il est par conséquent pratiquement impossible d'assurer un centrage parfait du rotor dans le stator. La machine est dite excentrée lorsque l'axe de rotation du rotor est différent de l'axe longitudinal géométrique du stator.

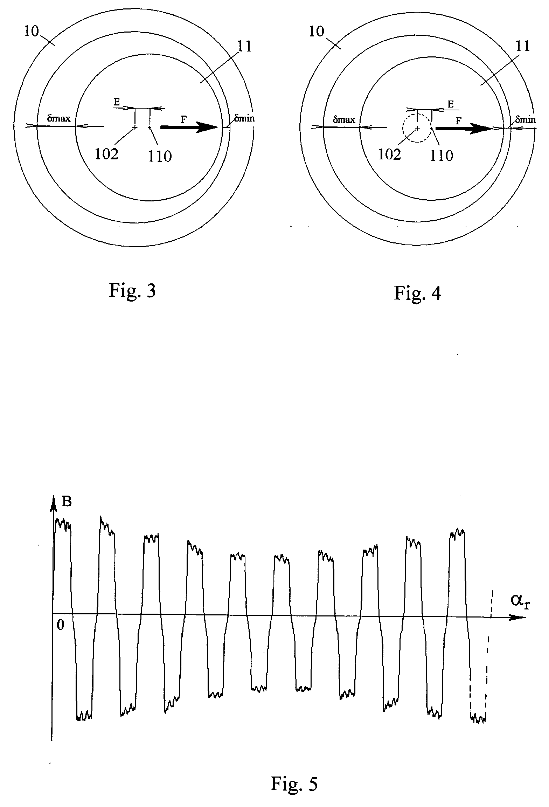

La figure 3 représente la position relative du rotor 11 par rapport au stator 10 dans le cas d'une excentricité statique. Dans ce cas, le centre de rotation, respectivement l'axe de rotation 110 du rotor est fixe relativement au centre géométrique, respectivement à l'axe longitudinal 102 du stator.

La figure 4 représente la position relative du rotor 11 par rapport au stator 10 dans le cas d'une excentricité dynamique. Dans ce cas, le centre de rotation, respectivement l'axe de rotation 110 du rotor tourne autour du centre géométrique, respectivement de l'axe longitudinal 102 du stator.

Il est à remarquer que généralement on a affaire à une excentricité combinée résultant de la juxtaposition d'une excentricité statique et d'une excentricité dynamique.

Dans une machine excentrée, l'entrefer δ sous chaque pôle n'est plus constant mais varie selon une loi sinusoïdale :

$$\delta = 0.5 * (\delta\max + \delta\min) * (1 + \varepsilon \cos \beta) \qquad [3]$$

où :

δmax :    entrefer maximal
δmin :    entrefer minimal
ε :    excentricité relative = 2 * E / (δmax + δmin)
E :    distance entre les centres respectivement les axes 110 et 102.
β :    angle géométrique. L'expression de β sera explicitée ci après.

Cette variation de l'entrefer provoque un effort magnétique radial non compensé F. Cet effort, pouvant atteindre plusieurs centaines de tonnes dans certains cas, peut avoir des conséquences néfastes sur les éléments mécaniques de la machine, pouvant amener à leur destruction.

La figure 5 représente la répartition de l'induction dans l'entrefer d'une machine excentrée. On constate que la courbe d'induction est modulée par une fonction sinusoïdale, selon la loi de variation de l'entrefer [3]. Dans ce cas l'induction dans l'entrefer est exprimée par :

$$B(\alpha_s) = (\sum_{\upsilon} {}^{\upsilon}B_{\max}.\sin(\upsilon(\alpha_s - \Omega t) + \phi_{\upsilon})) / (1 + \varepsilon \cos \beta) \qquad [4]$$

avec :

$\beta = \alpha_s$        dans le cas d'une excentricité statique,

$\beta = \alpha_s - \Omega t$     dans le cas d'une excentricité dynamique

$\Omega$           étant la vitesse de rotation angulaire

t           étant le temps.

Pour les valeurs de $\varepsilon$ beaucoup plus faibles que 1, la fonction [4] peut s'écrire :

$$B(\alpha_s) = (\sum_{\upsilon} {}^{\upsilon}B_{\max}.\sin(\upsilon(\alpha_s - \Omega t) + \phi_{\upsilon})) * (1 - \varepsilon \cos \beta) \qquad [5]$$

On remarque que selon [5] l'induction dans l'entrefer reflète la valeur $\varepsilon$ de l'excentricité relative de la machine.
Comme déjà signalé, en pratique l'excentricité dans une machine apparaît souvent sous la forme d'une combinaison des excentricités statique et dynamique : dans ce cas l'excentricité est dite mixte.
L'expression [5] peut être généralisée dans le cas d'une excentricité mixte ; soit $\varepsilon s$ la valeur de l'excentricité relative statique et $\varepsilon d$ la valeur de l'excentricité relative dynamique. L'induction dans l'entrefer d'une machine soumise à une excentricité mixte s'écrit alors :

$$B(\alpha_s)$$

$$=(\sum_{\upsilon} {}^{\upsilon}B_{\max}.\sin(\upsilon(\alpha_s - \Omega t) + \phi_{\upsilon})) (1 - \varepsilon s \cos \alpha_s) (1 - \varepsilon d \cos (\alpha_s - \Omega t)) \quad [6]$$

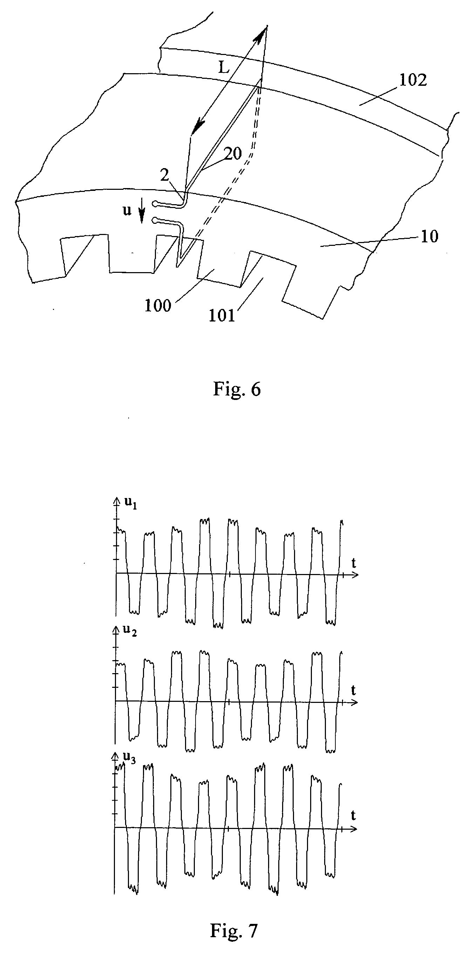

L'image de l'induction dans l'entrefer peut être captée en installant une pluralité de boucles ou spires de mesure individuelles réparties le long de la périphérie du stator, ces spires individuelles entourant chacune une partie de la culasse du stator en passant successivement dans l'entrefer, de la machine, et dans les fentes de ventilation, comme on le voit à la figure 6.
Cette figure montre une portion du stator 10 comprenant quelques dents 100 séparées par les encoches 101. Sur la longueur du stator, on trouve quelques fentes de ventilation 102 permettant d'évacuer la chaleur produite lors du fonctionnement de la machine. Une boucle de mesure 2, comprenant ici une seule spire 20 a été installée comme indiqué précédemment sur cette portion de stator. Plusieurs boucles de mesure 2 comme ci-dessus sont régulièrement disposées sur le pourtour du stator. Vu qu'il s'agit de mesurer une tension induite u qui soit une image de l'induction $B(\alpha_s)$ à l'endroit de la mesure, d'autres modes de disposition de la boucle de mesure 2 sont aussi envisageables, par exemple ladite boucle entourant une ou plusieurs dents 100. Dans ce cas, la tension induite mesurée restera une image de l'induction dans l'entrefer en cet endroit et ne différera des relations qui suivent que par un coefficient constant.
Si on admet une disposition comme indiqué sur la figure 6, la boucle 2 comportant une seule spire de mesure et étant disposée comme indiqué, la tension induite u aux bornes de la spire est :

$$u\text{-}B(\alpha_s)*v*L \qquad [7]$$

où :

$B(\alpha_s)$ :     induction dans l'entrefer à l'endroit de la spire
v :        vitesse tangentielle du rotor au niveau de l'entrefer, dans une machine synchrone travaillant en régime normal, cette vitesse est constante.

L :       longueur axiale de la spire.

Dans ces conditions, la tension induite u aux bornes de la spire est directement l'image de l'induction dans l'entrefer.

En remplaçant l'expression [6] de $B(\alpha_s)$ dans [7] on obtient :

$$u =$$

$$vL((\sum_\upsilon {}^\upsilon B_{max}.\sin(\upsilon(\alpha_s - \Omega t) + \phi_\upsilon))/(1\text{-}\varepsilon s \cos \alpha_s)(1\text{–}\varepsilon d \cos (\alpha_s \text{-}\Omega t))\ [8]$$

Soit $\alpha_{si}$ la position angulaire de la spire i sur la périphérie du stator, la tension induite $u_i$ aux bornes de cette spire i est donnée par :

$$u_i =$$

$$vL((\sum_\upsilon {}^\upsilon B_{max}.\sin(\upsilon(\alpha_{si} - \Omega t) + \phi_\upsilon)(1\text{- }\varepsilon s \cos \alpha_{si})(1\text{–}\varepsilon d \cos (\alpha_{si}\text{ -}\Omega t))\ [9]$$

La figure 7 représente un exemple des tensions induites $u_1$, $u_2$ et $u_3$ aux bornes de 3 spires de mesure placées en trois endroits différents sur le pourtour d'un stator d'une machine ayant une excentricité mixte avec εs d'environ 0.15 et εd d'environ 0.10.

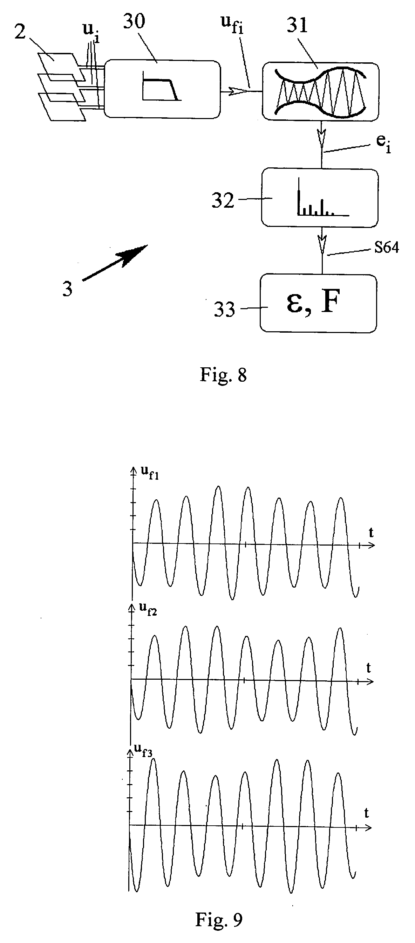

Afin de pouvoir être traités, les signaux $u_i$, respectivement $u_1$, $u_2$ et $u_3$ sont envoyés à des moyens de filtrage 30 des moyen de traitement 3 représentés à la figure 8. Ces moyens de filtrage 30 sont chargés d'éliminer les composantes harmoniques dont les fréquences sont supérieures à celle du fondamental de fréquence $f_n$ définie par :

$$f_n = p^*\Omega/2\Pi \tag{10}$$

avec p : nombre de paires de pôles de la machine

La figure 9 représente les signaux $u_{f1}$, $u_{f2}$ et $u_{f3}$ à la sortie des moyens de filtrage 30. En admettant un filtrage parfait des composantes harmoniques de fréquences supérieures à $f_n$ , les signaux à la sortie des moyens de filtrage sont donnés par :

$$U_{fi} =$$

$$vL^{\ p}.B_{max} \sin(p(\alpha_{si} - \Omega t) + \phi_p)\ (1 - \varepsilon s \cos \alpha_{si})\ (1 - \varepsilon d \cos (\alpha_{si}\text{ -}\Omega t))\ [\ 11\ ] \tag{11}$$

Les signaux filtrés $u_{f1}$, $u_{f2}$ et $u_{f3}$ sont envoyés vers des moyens d'extraction d'enveloppes 31 représentés sur la figure 8.

Les signaux $e_i$ à la sortie des moyens d'extraction d'enveloppes 31 apparaissent sous la forme :

$$e_i = 2\ vL^{\ p}\ .B_{max}\ (1 - \varepsilon s \cos \alpha_{si})(1 - \varepsilon d \cos (\alpha_{si}\text{ -}\Omega t)) \tag{12}$$

On remarque que pour une valeur $\alpha_{si}$ déterminée, $e_i$ ne dépend que du temps.

La valeur moyenne $e_{im}$ de ces signaux, calculée sur un tour de rotation de la machine est égale à :

$$e_{im} = 2\ vL^{\ p}\ .B_{max}\ (1 - \varepsilon s \cos \alpha_{si}) \tag{13}$$

Les amplitudes des signaux $e_i$ à la fréquence $f_n$ / p sont données par:

$$\hat{e}_i = 2\,\varepsilon d\, vL^{\,p}\,.B_{max}\,(1 - \varepsilon s\,\cos\,\alpha_{si}) \qquad\qquad [14]$$

qui représente le premier harmonique temporel.

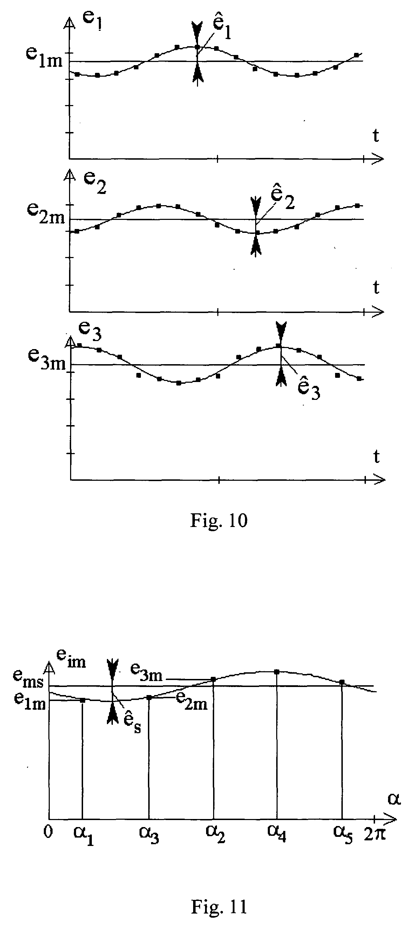

La figure 10 montre les signaux $e_i$ représentant les enveloppes des signaux $u_{fi}$ à la sortie des moyens d'extraction d'enveloppes 31 ainsi que les divers signaux mentionnés ci-dessus.

On constate que la valeur de l'excentricité dynamique $\varepsilon d$ est donnée par le rapport entre l'amplitude $\hat{e}_i$ et la valeur moyenne $e_{im}$ :

$$\varepsilon d = \hat{e}_i\,/\,e_{im} \qquad\qquad [15]$$

On remarque que la valeur de $\varepsilon d$ est la même, pour n'importe laquelle des spires de mesure. En conséquence, un dispositif de mesure simplifié, apte à mesurer uniquement $\varepsilon d$, pourrait ne comporter qu'une seule boucle ou spire de mesure.

La figure 11 représente les valeurs moyennes $e_{im}$ des enveloppes en fonction de la position angulaire $\alpha_{si}$ des spires de mesure. Dans l'exemple considéré ici, la machine possède cinq spires de mesure réparties régulièrement le long de la périphérie du stator. On constate selon [13] que les valeurs moyennes $e_{im}$ sont distribuées spatialement en fonction des positions $\alpha_{si}$ selon une loi sinusoïdale.

Soit $e_{ms}$ la valeur moyenne de $e_{im}$ sur une période $2\Pi$ et $\hat{e}_s$ l'amplitude du premier harmonique spatial de $e_{im}$ , on obtient :

$$e_{ms} = 2\,vL^{\,p}.B_{max} \qquad\qquad [16]$$

$$\hat{e}_s = 2\,\varepsilon s\,vL^{\,p}.B_{max} \qquad\qquad [17]$$

La valeur de l'excentricité statique $\varepsilon s$ est donnée par le rapport entre l'amplitude $\hat{e}_s$ et la valeur moyenne $e_{ms}$ :

$$\varepsilon s = \hat{e}_s/\,e_{ms} \qquad\qquad [18]$$

Connaissant l'excentricité maximum équivalente à la somme de l'excentricité statique et de l'excentricité dynamique, ainsi que les valeurs constructives telles que la longueur axiale La et le rayon d'alésage R de même que les données électriques et magnétiques de la machine, il est aisé de déterminer ensuite la force d'attraction radiale non compensée F à partir dé la pression magnétique par unité de surface $\sigma$ :

$$\sigma = B^2/2\mu_o \qquad\qquad [19]$$

où :

B :   composante normale de l'induction à la surface du stator
$\mu_o$ :   perméabilité du vide = $4\,\Pi\,10^{-6}$

$$F = La.R.\int_0^{2\pi}\sigma.d\alpha \qquad\qquad [20]$$

En se reportant à la figure 8, on voit l'ensemble des étapes du procédé de traitement des signaux selon l'invention. Les signaux de tensions induites $u_i$, comme représentés à titre d'exemple en figure 5, en provenance des différentes boucles ou spires de mesure 2, sont individuellement envoyés aux moyens de filtrage 30, lesquels délivrent à la sortie les signaux filtrés $u_{fi}$, comme représentés à titre d'exemple en figure 8. Ce filtrage permet de supprimer les harmoniques de fréquences supérieures à la fréquence électrique de la machine. Ces signaux filtrés sont ensuite envoyés vers des moyens d'extraction d'enveloppes 31 fournissant à leur sortie des signaux $e_i$ comme représentés à

titre d'exemple en figure 9. Ces signaux sont ensuite envoyés à des moyens d'analyse harmonique 32, aptes à déterminer les valeurs moyennes des enveloppes ainsi que l'harmonique temporelle de fréquence $f_n / p$ ainsi que le premier harmonique spatial.

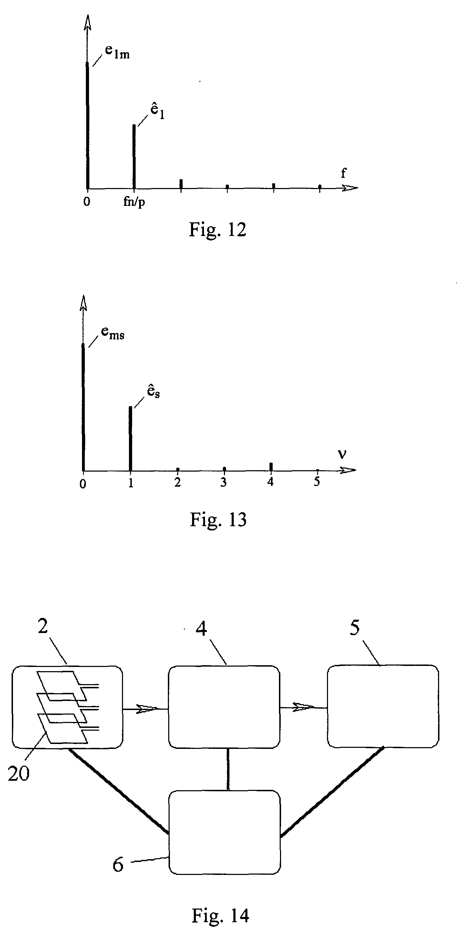

La figure 12 représente un exemple du spectre temporel à la sortie des moyens d'analyse harmonique 32.

La figure 13 représente un exemple du spectre spatial à la sortie des moyens d'analyse harmonique 32.

Ces résultats permettent à un calculateur 33 de calculer les valeurs effectives des différentes excentricités de la machine synchrone ainsi que l'effort magnétique radial non compensé qui en résulte selon les relations [1] à [20] explicitées plus haut.

La figure 14 représente un dispositif de surveillance et de mesure en continu de l'excentricité d'une machine synchrone utilisant le procédé de traitement des signaux de tensions induites selon l'invention vu précédemment.

Ce dispositif comprend des moyens de mesure 2 comprenant plusieurs boucles ou spires de mesure 20 réparties à la périphérie du stator, des moyens de traitement de signaux 4 selon l'invention ainsi que des moyens de communication 5 aptes à transmettre les résultats de mesure à l'extérieur de la machine. Les trois moyens 2, 4 et 5 ci-dessus sont alimentés en énergie par des moyens d'alimentation 6 aptes à fournir l'énergie nécessaire au dispositif, cette énergie pouvant provenir de l'extérieur de la machine, via des câbles d'alimentation, ou étant prélevée directement sue la machine par captage du flux magnétique produit.

Les moyens de traitement de signaux 4 du dispositif monté sur la machine et représenté à la figure 14 peuvent comprendre un ou plusieurs des modules 30, 31, 32 et 33 représentés sur la figure 8, le ou les modules non compris dans le dispositif monté sur la machine étant alors disposés à l'extérieur de la machine, après les moyens de transmission 5.

L'installation de deux dispositifs de surveillance identiques tels que décrits précédemment à chaque extrémité axiale d'une machine synchrone permet en outre de surveiller le parallélisme entre les axes du stator et du rotor.

**Revendications**

1. Procédé de traitement de tensions induites en provenance d'au moins une spire de mesure disposée sur une machine synchrone de manière à capter une image de l'induction dans l'entrefer de la machine à l'endroit de la spire, afin de déterminer les valeurs des excentricités statiques et dynamiques relatives du rotor par rapport au stator de la machine ainsi que l'effort radial non compensé dû à ces excentricités,
   **caractérisé en ce qu'**il comprend les étapes suivantes :

   - prélever individuellement lesdites tensions induites ($u_i$) aux bornes de chaque spire (20) et transmission desdites tensions induites à des moyens de filtrage (30) aptes à éliminer les composantes de fréquences supérieures à la fréquence fondamentale de la machine ($f_n$),
   - transmission individuelle des signaux ($u_{fi}$) de sortie des moyens de filtrage à des moyens d'extraction d'enveloppes (31) aptes à fournir des signaux de sortie ($e_i$) qui soient des images des enveloppes des signaux de sortie des moyens de filtrage,
   - transmission individuelle des signaux de sortie ($e_i$) des moyens d'extraction d'enveloppes à des moyens d'analyse harmonique (32) aptes à déterminer les valeurs moyennes ($e_{im}$), la valeur du premier harmonique temporel ainsi que celle du premier harmonique spatial desdits signaux de sortie ($e_i$) des moyens d'extraction d'enveloppes,
   - transmission desdites valeurs à des moyens de calcul (33) aptes à calculer indépendamment la valeur de l'excentricité statique ($\varepsilon s$), la valeur de l'excentricité ($\varepsilon d$) dynamique et la valeur de l'effort radial (F) non compensé dû à ces excentricités.

2. Dispositif de surveillance en continu d'une machine synchrone pour la mise en oeuvre du procédé de la revendication précédente, **caractérisé en ce qu'**il comprend :

   - des moyens de mesure de tensions induites ($u_i$) comprenant au moins une boucle de mesure (2) comprenant au moins une spire de mesure (20) apte à capter une image de l'induction dans l'entrefer de la machine à l'endroit de la boucle de mesure,
   - des moyens de filtrage (30) aptes à éliminer les composantes de fréquences supérieures à la fréquence fondamentale de la machine ($f_n$),
   - des moyens d'extraction d'enveloppes (31) aptes à fournir des signaux de sortie ($e_i$) qui soient des images des enveloppes des signaux de sortie des moyens de filtrage,
   - des moyens d'analyse harmonique (32) aptes à déterminer les valeurs moyennes ($e_{im}$), la valeur de l'harmonique temporelle ainsi que celle de l'harmonique spatiale desdits signaux de sortie ($e_i$) des moyens d'extraction d'enveloppes,

- des moyens de calcul (33) aptes à calculer indépendamment la valeur de l'excentricité statique ($\varepsilon$s), la valeur de l'excentricité ($\varepsilon$d) dynamique et la valeur de l'effort radial (F) non compensé dû à ces excentricités.

3. Dispositif de surveillance selon la revendication précédente, **caractérisé en ce que** les moyens de mesure de tensions induites ($u_i$) étant disposés sur la machine, au moins un parmi lesdits moyens de filtrage (30), d'extraction d'enveloppes (31), d'analyse harmonique (32) et de calcul (33) est aussi monté sur la machine, ledit dispositif comprenant en outre des moyens d'alimentation (6) desdits moyens (4) montés sur la machine.

4. Dispositif de surveillance selon la revendication précédente **caractérisé en ce que** les moyens d'alimentation sont aptes à capter le flux d'induction produit par la machine pour alimenter en énergie lesdits moyens (4) montés sur la machine.

5. Dispositif de surveillance selon l'une des revendications 2 ou 3, **caractérisé en ce que** les moyens de filtrage (30), d'extraction d'enveloppes (31), d'analyse harmonique (32) ou de calcul (33) qui ne sont pas montés sur la machine, sont reliés aux moyens (4) montés sur la machine par les moyens de transmission (5).

6. Dispositif de surveillance selon l'une des revendications 2 à 5, **caractérisé en ce que** les moyens de mesure de tensions induites comprennent plusieurs boucles de mesure (2) régulièrement réparties sur le pourtour du stator.

7. Dispositif de surveillance selon la revendication 6, **caractérisé en ce que** chaque boucle de mesure (2) entoure une portion de la culasse du stator et passant par une encoche (101), une fente de ventilation (102) et l'extérieur du stator (10).

8. Dispositif de surveillance selon la revendication 7, **caractérisé en ce que** chaque boucle de mesure (2) comprend une seule spire (20).

9. Dispositif de surveillance selon l'une des revendications 2 à 8, **caractérisé en ce que**, disposé à une extrémité longitudinale de la machine et associé à un dispositif semblable disposé à l'autre extrémité de la machine, les signaux fournis par les deux dispositifs sont aptes à permettre de déterminer un non parallélisme entre les axes du rotor et du stator de la machine.

Fig. 1

Fig. 2

Fig. 3                    Fig. 4

Fig. 5

Fig. 6

Fig. 7

Fig. 8

Fig. 9

Fig. 10

Fig. 11

Fig. 12

Fig. 13

Fig. 14

**Office européen des brevets**

## RAPPORT DE RECHERCHE EUROPEENNE

Numéro de la demande

EP 03 00 4796

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | DE 12 26 200 B (CONTINENTAL ELEKTRO IND AG) 6 octobre 1966 (1966-10-06) * colonne 5, ligne 33 - colonne 6, ligne 8; revendication 1; figures 1-3 * --- | 1,2 | H02K15/16 G01R31/34 |
| A | US 4 199 718 A (IKEDA HIROSHI ET AL) 22 avril 1980 (1980-04-22) * colonne 8, ligne 43 - ligne 57; revendication 1; figure 1 * --- | 1,2 | |
| A | GB 1 462 760 A (TEIKOKU DENKI SEISAKUSHO KK) 26 janvier 1977 (1977-01-26) * revendication 1; figure 1 * --- | 1,2 | |
| A | NANDI S ET AL: "Condition monitoring and fault diagnosis of electrical machines-a review" , INDUSTRY APPLICATIONS CONFERENCE, 1999. THIRTY-FOURTH IAS ANNUAL MEETING. CONFERENCE RECORD OF THE 1999 IEEE PHOENIX, AZ, USA 3-7 OCT. 1999, PISCATAWAY, NJ, USA,IEEE, US, PAGE(S) 197-204 XP010355174 ISBN: 0-7803-5589-X * page 200 - page 201 * --- | 1,2 | DOMAINES TECHNIQUES RECHERCHES (Int.Cl.7) H02K G01R G01M |
| A | FR 2 824 914 A (ECOLE NORMALE SUPERIEURE DE CA) 22 novembre 2002 (2002-11-22) * page 15, ligne 20 - ligne 25; revendications 1,5 * * page 17, ligne 7 - ligne 10; figures 4,7 * ----- | 1,2 | |

Le présent rapport a été établi pour toutes les revendications

| Lieu de la recherche | Date d'achèvement de la recherche | Examinateur |
|---|---|---|
| BERLIN | 2 octobre 2003 | Roy, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**      EP 03 00 4796

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-10-2003

| Document brevet cité au rapport de recherche | | Date de publication | Membre(s) de la famille de brevet(s) | | Date de publication |
|---|---|---|---|---|---|
| DE 1226200 | B | 06-10-1966 | AUCUN | | |
| US 4199718 | A | 22-04-1980 | JP | 1331067 C | 14-08-1986 |
| | | | JP | 52132309 A | 07-11-1977 |
| | | | JP | 60052654 B | 20-11-1985 |
| | | | CH | 617768 A5 | 13-06-1980 |
| | | | DE | 2719004 A1 | 10-11-1977 |
| | | | FR | 2361627 A1 | 10-03-1978 |
| | | | GB | 1578298 A | 05-11-1980 |
| | | | IT | 1076739 B | 27-04-1985 |
| | | | NL | 7704645 A | 01-11-1977 |
| | | | SE | 434194 B | 09-07-1984 |
| | | | SE | 7704760 A | 29-10-1977 |
| GB 1462760 | A | 26-01-1977 | JP | 1230673 C | 26-09-1984 |
| | | | JP | 49059201 A | 08-06-1974 |
| | | | JP | 58054580 B | 05-12-1983 |
| | | | DE | 2351453 A1 | 25-04-1974 |
| | | | FR | 2203204 A1 | 10-05-1974 |
| | | | IT | 995750 B | 20-11-1975 |
| | | | US | 4211973 A | 08-07-1980 |
| | | | SU | 604515 A3 | 25-04-1978 |
| FR 2824914 | A | 22-11-2002 | FR | 2824914 A1 | 22-11-2002 |

EPO FORM P0460

Pour tout renseignement concernant cette annexe : voir Journal Officiel de l'Office européen des brevets, No.12/82